# EUROPEAN PATENT SPECIFICATION

(11) **EP 4 545 409 B1**
(45) Date of publication and mention of the grant of the patent: **02.12.2026**
(21) Application number: 23205960.0
(22) Date of filing: 26.10.2023
(51) Int. Cl.: B64D 11/00, B64D 11/06, B64D 45/00, G06V 20/59

(54) **METHOD AND SYSTEM FOR SURVEILLANCE OF A PASSENGER CABIN OF AN AIRCRAFT**
VERFAHREN UND SYSTEM ZUR ÜBERWACHUNG EINER PASSAGIERKABINE EINES FLUGZEUGS
PROCÉDÉ ET SYSTÈME DE SURVEILLANCE D'UNE CABINE PASSAGERS D'UN AÉRONEF

(43) Date of publication of application: 30.04.2025
(73) Proprietor: Airbus Operations GmbH, 21129 Hamburg (DE)
(72) Inventor: Sobeck, Frederik, 21129 Hamburg (DE)
(74) Representative: Airbus Germany

(56) References cited:
- EP-A1- 2 819 100
- JP-A- H08 315 258
- US-A1- 2019 177 004
- US-A1- 2020 028 687
- US-A1- 2023 120 829
- US-B2- 10 752 130
- US-B2- 11 729 432
- US-B2- 9 889 934
- EMILY FRIEDMAN: "Making Your Next Flight Safer and Smoother with Wearable AR VR Augmented Enterprise Summit", 27 June 2018 (2018-06-27), XP093371884, Retrieved from the Internet <URL:https://augmentedenterprisesummit.com/making-your-next-flight-safer-and-smoother-with-wearable-ar-vr/>
- KUNZE KAI ET AL: "LYRA : smart wearable in-flight service assistant", PROCEEDINGS OF THE 2018 ACM INTERNATIONAL SYMPOSIUM ON WEARABLE COMPUTERS, ISWC '18, 8 October 2018 (2018-10-08), New York, New York, USA, pages 212 - 213, XP093371887, ISBN: 978-1-4503-5967-2

## Description

The present invention pertains to a method and system for surveillance of a passenger cabin of an aircraft.

As per certification specifications, it may be required for a cabin attendant to have visual sight of the aisle of an aircraft and also sight of at least 50% of the passengers. This may in particular apply to critical phases of a flight, including take-off and landing. During these critical phases, the cabin attendants usually have to remain at respective flight attendant seats while being capable of monitoring the passenger seats in accordance with the above-cited regulation requirements. Due to these requirements the crew attendant seats may have to be located appropriately within the cabin and to be oriented toward certain cabin areas that are to be monitored.

To enable the cabin attendant to be seated against flight direction for better space usage in the rear end of the aircraft opposite of the galleys, a monitoring system using a camera for passenger and aisle surveillance may be used. The camera view may then be then displayed on a monitor at the galley end of the cabin opposite to the flight attendant. See, for example, document EP 3 606 818 B1 for an example of such a cabin monitoring system.

Document EP 2 939 924 A1 describes the use of a wearable device as digital crew assist that is connectable with one or more aircraft related systems such as a cabin management system as well as sensors, actuators and so on.

Document EP 2 819 100 A1 describes the use of augmented reality images in an aircraft during flight to enhance the well-being of passengers and to display technical aspects of the aircraft on a portable device of the passengers.

Document US 2023/120829 A1 describes a person activity recognition.

Document US 2020/028687 A1 describes a continuity of access to avionic data outside of the cockpit of an aircraft.

Document JP H08 315258 A describes a monitor in an intelligent machine.

Document US 10 752 130 B2 describes a monitoring module for a seat of a passenger aircraft, a monitoring device and a passenger aircraft.

Document US 2019/177004 A1 describes an integrated imaging system for a connected aircraft.

Document US 9889934 B2 describes a digital crew assist.

Document US 11 729 432 B2 describes an inflight entertainment system using video object recognition to monitor seat areas and generate flight crew notifications.

Emily Friedman: "Making Your Next Flight Safer and Smoother with Wearable AR VR Augmented Enterprise Summit", 27 June 2018 (201 8-06-27), XP093371 884, describes wearable AR and VR for flights.

Kunze Kai ET AL: "LYRA : smart wearable in-flight service assistant", Proceedings of the 2018 ACM International Symposium an Wearable Computers, ISWC '18, 8 October 2018 (2018-1 0-08), pages 212-213, XP093371 887, describes a smart wearable In-Flight service assistant.

Against this background, it is an object of the present invention to find a solution for cabin surveillance with less complexity and with reduced costs.

This object is achieved by a method having the features of claim 1 and an aircraft having the features of claim 5.

Thus, one idea of the present invention is to digitalize the cabin environment and automatize surveillance of it by providing the cabin crew with information on seat occupation and seatbelt statuses continuously and automatically on their smart glasses. The use of wireless information transfer technology facilitates oversight of the relevant situation without restricting the cabin attendants to a specific location in the aircraft, as they have all information in sight at any position and viewing direction. In consequence, cabin operations such as checking for fastened seatbelts and fulfilling certification requirements such as visual coverage of the passengers and/or the aisle can be done much more flexible and efficient. Also movement of the cabin crew can be reduced, which in turn enhances safety, especially during turbulences and other difficult situations, as the crew can remain seated while still having full overview of the situation due to the projected information on their glasses. With the use of smart glasses weight can be reduced, as heavy monitors and the necessary electrical and mechanical installations are no longer required.

Such a digitalized cabin may comprise cameras and other detection devices as part of the video surveillance system. The computer-based evaluation system may then recognize whether seats are empty or occupied based on object/pattern recognition algorithms, which may, for example, utilize advanced machine learning and/or artificial intelligence based evaluation. Such systems may also be used to assess various others aspects and/or data on the current cabin situation, e.g. whether passengers are seated or standing, or indications of an emergency or other situation requiring the immediate attention of the cabin crew. The evaluation system may be provided as a dedicated computer system (cabin monitoring computer) or may be part of such a system, which may be integrated or communicatively coupled to a cabin management system of the respective aircraft.

Furthermore, seatbelts may be provided with suitable sensors to assess whether they are (properly) closed and/or open. Such sensor may comprise, for example, wired contact switches on the seat belts. In another example, the seat belts may be equipped with near field communication (NFC) technology that can determine their closing status.

The evaluation of both information, that is, the seat occupation status and the seat belt status, allows for a detailed assessment of each seat inside the cabin as to its status. The system can thus automatically analyze whether seats are occupied or not and whether the respective seatbelts are fastened or not.

Sharing of this information via a wireless data network to the crew's smart glasses, provides them with the ability to check the current status of the cabin in real-time, in principle even without having direct sight of it. A full or partial view of the cabin may be projected on their glasses and additional information about the cabin may be overlayed. For example, dedicated indicators, icons, scales or other graphical elements may be projected and/or overlayed. Additional coloring and/or shading may further help to visualize certain data. These may be accompanied by other visual signals like flashing and/or additional auditory information, e.g. to inform the crew about an emergency or similar.

Advantageous embodiments and improvements of the present invention are found in the subordinate claims.

According to the invention, a current view of the passenger cabin is captured with the video surveillance system, wirelessly transmitted to the portable crew device and overlayed there and projected together with the visual cabin information.

Hence, not only visual indicators representing data on the current cabin situation may be projected on the portable crew device. Rather, a real live view of the present situation within the passenger cabin may be projected, e.g. a static view from one or several fixed positions and/or directions.

According to an embodiment of the invention, the current view of the passenger cabin may be a static view being independent of a current viewing direction and a current position associated with the portable crew device.

In this embodiment a static sight of the cabin is provided on the smart glasses from a fixed perspective, e.g. as delivered by one or several cameras. The crew can then access this view of the cabin from anywhere inside the aircraft, e.g. from within the flight crew compartment even when sitting on a flight attendant seat with the back to the passenger cabin.

According to an embodiment of the invention, the current view of the passenger cabin may be a dynamic view being adapted according to a current viewing direction associated with the portable crew device.

In this case, a dynamic projection is provided on the smart glasses dependent on the direction of the person wearing the smart glasses. The cabin attendant is then able to dynamically assess the current situation in the cabin by moving the head around and thereby change the perspective on the cabin interior much like in a virtual reality environment. In order to provide such an adaptable current view/perspective on the cabin interior, several adaptable cameras may be combined to provide extensive coverage of the cabin interior. In that vein, the cabin attendant may also be able to assess the situation from different directions and/or positions within the cabin.

According to an embodiment of the invention, the visual cabin information may be projected on the portable crew device as augmented reality images.

For example, the projected image on the smart glasses may be adapted according to the current viewing direction of the respective cabin attendant, e.g. while walking along the aisle of the passenger cabin. Here, information can be displayed onto the glasses while looking through the glasses to project the information to a specific location within the passenger cabin with certain data overlayed over the current image of the cabin, in particular the seat occupation status and the seat belt status.

According to the invention, the computer-based evaluation system assesses a passenger status within the passenger cabin based on the captured live video feed, the passenger status including information on whether passengers are seated or standing. A corresponding passenger status is projected on the portable crew device as part of the visual cabin information.

Hence, additional information may be taken into account besides the seat occupation status and the seat belt status.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a top view of a passenger cabin of an aircraft according to an embodiment of the invention.
Fig. 2 schematically depicts a flow diagram of a method for surveillance of the passenger cabin of Fig. 1 according to an embodiment of the invention.

Although specific embodiments are illustrated and described herein, it will be appreciated by those of ordinary skill in the art that a variety of alternate implementations may be substituted for the specific embodiments shown and described without departing from the scope of the present invention, as defined by the claims.

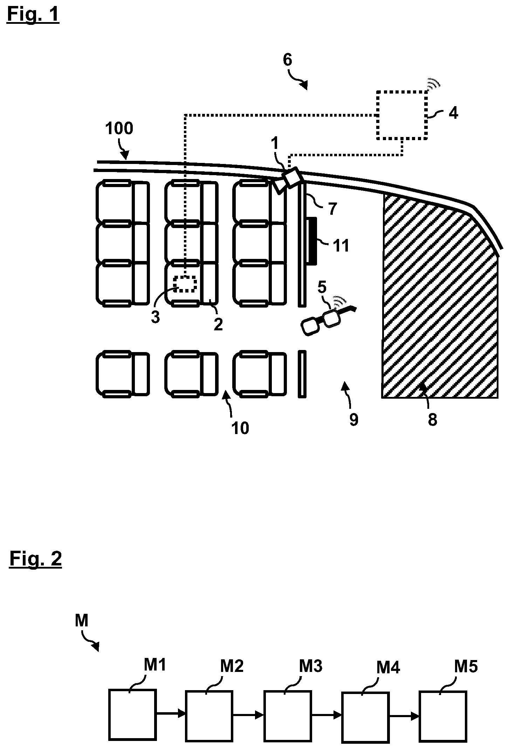

Figure 1 schematically depicts a top view of a passenger cabin 10 of an aircraft 100 according to an embodiment of the invention that is provided with a cabin surveillance system 6. Fig. 2 schematically depicts a flow diagram of a method M for surveillance of the passenger cabin 10 of Fig. 1 according to an embodiment of the invention.

The aircraft 100 may be, for example, a single aisle passenger aircraft. Fig. 1 depicts a rear end of the respective aircraft 100. As can be seen in the figure, the aircraft 100 comprises a passenger cabin 10 with a plurality of passenger seats 2 and a flight crew compartment 9 with a flight attendant seat 11. Both cabin sections 10, 9 are separated by several partition walls 7, whereby a passageway is formed along the aisle that connects the flight crew compartment 9 with the passenger cabin 10 in the usual manner. The flight crew compartment 9 may include a galley 8 for example. It is to be understood that the depicted arrangement is merely an example. It will be clear to the person of skill that the invention can be used in various other cabin configurations. It is also clear that more than one flight attendant seat 3 could be provided within the flight crew compartment 9.

For passenger transportation, regulations usually require that at least a certain percentage of the passenger seats 2 must be visible by cabin attendants, in particular under critical phases of a flight like take-off and landing phases. The cabin attendants have to remain at respective flight attendant seats 3 (as the one exemplary shown in the figures) while being capable of monitoring the passenger seats 2 in accordance with the above-cited regulation requirements.

At the depicted rear end of the aircraft 100, the cabin attendants are conventionally seated against flight direction for better space usage in the rear end of the aircraft 100, as the galley 8 is arranged at the opposite end. As it is difficult or at least inconvenient for the cabin attendants to monitor the passenger cabin 10 from such a position, a monitoring system is typically installed within a cabin including a monitor mounted at the galley, which displays a live view of the passenger seats 2. These systems are typically rather complex and expensive, as the electrical installation needs to be provided between one or several cameras in the passenger cabin 10 and the monitor in the galley 8. In addition, the necessary mechanical provisions further increase the costs and weight of such conventional installations.

The present solution offers a simple alternative to such complex arrangements by relying on a digitized cabin environment with wireless access to sensor data and computer based systems that can be used to feed a live view of the cabin along with all relevant information to portable devices of the cabin attendants.

More specifically, the present cabin surveillance system 6 comprises a video surveillance system 1 configured to capture a live video feed of the passenger cabin 10, which may comprise one or several cameras installed within the passenger cabin 10, e.g. on the partition walls 7 between the passenger cabin 10 and the flight crew compartment 9. It is to be understood that this merely an example, as it will be clear to the person of skill that also other sensor technologies may be employed in addition for the present purpose.

The cabin surveillance system 6 further comprises a seat belt sensor system 3 configured to collect seat belt condition data of passenger seats 2 within the passenger cabin 10. The seat belt sensor system 3 may comprise, for example, wired contact switches within each individual seat belt as well as near field communication technology.

The cabin surveillance system 6 further comprises a computer-based evaluation system 4, which may be integrated in or communicatively coupled to a cabin management system of the aircraft (e.g. via a wireless data network). The computer-based evaluation system 4 is configured to assess a current seat occupation status of the passenger seats 2 based on the captured live video feed and a current seat belt status of the passenger seats 2 based on the collected seat belt condition data.

For example, the system 4 may distinguish between empty and occupied seats based on machine learning and/or artificial intelligence tools. In another example, the system 4 is able to detect whether passengers are seated or standing. To this end, the computer-based evaluation system 4 additionally assesses a passenger status within the passenger cabin 10 based on the captured live video feed, wherein the passenger status includes information on whether passengers are seated or standing. The system 4 may even be used to automatically identify the passengers based on booking and identification information provided for each flight.

Hence, the system 4 is able to assess the current seat occupation as well as the seat belt situation, that is, whether the seat belts of occupied seats are fastened or not, as well as whether passenger are standing, e.g. in the aisle or are using the lavatory etc.

The respective data are then wirelessly transmitted by the computer system 4 to portable crew devices 5 of the aircraft crew, in particular to smart glasses of each crew member (one of which is exemplarily shown in Fig. 1).

Based on the received seat occupation status, the seat belt status and passenger status, each pair of smart glasses 5 then projects visual cabin information representing the seat occupation status and the seat belt status on the portable crew device 5. The visual cabin information is overlayed over a current view of the passenger cabin 10 as captured with the cabin surveillance system 1 and projected together with it on the portable crew device 5. The visual cabin information may be particularly projected on the portable crew device 5 as augmented reality images.

The corresponding method M as schematically shown in Fig. 2 comprises under M1 capturing the live video feed of the passenger cabin 10 with the video surveillance system 1, under M2 collecting the seat belt condition data of the passenger seats 2 with the seat belt sensor system 3, under M3 assessing with the computer-based evaluation system 4 the current seat occupation status of the passenger seats 2 and the passenger status based on the captured live video feed and the current seat belt status of the passenger seats 2 based on the collected seat belt condition data.

The method M further comprises under M4 wirelessly transmitting the seat occupation status, the passenger status and the seat belt status to the smart glasses used as portable crew device 5. Under M5 the method M comprises projecting visual cabin information representing the seat occupation status and the seat belt status on the portable crew device 5, which is projected together with a current view of the passenger cabin 10 as captured with the video surveillance system 1.

At least two different modes can be provided here: In one case, a static view can be displayed on the smart glasses 5, which is independent of a current viewing direction and a current position associated with the respective smart glasses 5. For example, a video feed of the full cabin 10 or of some segments/portions of it may be projected on the smart glasses. The cabin information may then be overlayed over this video feed in the form of visual indicators like icons, highlighted and/or colored elements, numbers etc. that may indicated whether passengers are standing or are sitting but have not fastened their seatbelts. Also a sight along the aisle may be possible via the glasses 5 (independent of the attendant's current position).

In an alternative mode, the current view of the passenger cabin 10 may be a dynamic view being adapted according to the current viewing direction of the cabin attendant wearing the respective smart glasses 5.

The smart glasses 5 may be configured to display the visual cabin information together with the view of the passenger cabin 10 as augmented reality images. In principle, these information can also be displayed onto the glasses while looking through the glasses standing at a certain position within the cabin 10 and looking in a certain direction. In this case, (un-) occupied seats and/or (un-) fastened seatbelts may be highlighted within the view based on the ML/Al-supported evaluation and thus point the cabin attendants directly to the respective seats 2.

The present solution thus makes use of a digitized cabin environment to provide the cabin attendants with improved means to monitor the passenger cabin 10, thereby enhancing not only flexibility and efficiency but also safety, as they are able to access and evaluate a current situation within the cabin from basically anywhere in the aircraft.

In the foregoing detailed description, various features are grouped together in one or more examples or examples with the purpose of streamlining the disclosure. It is to be understood that the above description is intended to be illustrative, and not restrictive.

Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: video surveillance system
- 2: passenger seat
- 3: seat belt sensor system
- 4: computer-based evaluation system
- 5: portable crew device
- 6: cabin surveillance system
- 7: partition wall
- 8: galley
- 9: flight crew compartment
- 10: passenger cabin
- 11: flight attendant seat
- 100: aircraft
- M: method
- M1-M5: method steps

## Claims

1. Method (M) for surveillance of a passenger cabin (10) of an aircraft (100), the method (M) comprising:
capturing (M1) a live video feed of the passenger cabin (10) with a video surveillance system (1);
collecting (M2) seat belt condition data of passenger seats (2) within the passenger cabin (10) with a seat belt sensor system (3);
assessing (M3) with a computer-based evaluation system (4) a current seat occupation status of the passenger seats (2) based on the captured live video feed and a current seat belt status of the passenger seats (2) based on the collected seat belt condition data, which comprises assessing whether the seat belts of occupied seats are fastened or not;
wirelessly transmitting (M4) the seat occupation status and the seat belt status to a portable crew device (5), **characterized in that** the portable crew device (5) being a pair of smart glasses; and
projecting (M5) visual cabin information representing the seat occupation status and the seat belt status on the portable crew device (5);
wherein a current view of the passenger cabin (10) is captured with the video surveillance system (1), wirelessly transmitted to the portable crew device (5) and overlayed there and projected together with the visual cabin information;
wherein the computer-based evaluation system (4) assesses a passenger status within the passenger cabin (10) based on the captured live video feed, the passenger status including information on whether passengers are seated or standing, wherein the corresponding passenger status is projected on the portable crew device (5) as part of the visual cabin information.

2. Method (M) according to claim 1, wherein the current view of the passenger cabin (10) is a static view being independent of a current viewing direction and a current position associated with the portable crew device (5).

3. Method (M) according to claim 1, wherein the current view of the passenger cabin (10) is a dynamic view being adapted according to a current viewing direction associated with the portable crew device (5).

4. Method (M) according to one of the claims 1 to 3, wherein the visual cabin information is projected on the portable crew device (5) as augmented reality images.

5. Aircraft (100) having a passenger cabin (10) comprising a plurality of passenger seats (2) and a cabin surveillance system (6), the cabin surveillance system (6) comprising:
a video surveillance system (1) configured to capture a live video feed of the passenger cabin (10);
a seat belt sensor system (3) configured to collect seat belt condition data of passenger seats (2) within the passenger cabin (10);
a computer-based evaluation system (4) configured to assess a current seat occupation status of the passenger seats (2) based on the captured live video feed and a current seat belt status of the passenger seats (2) based on the collected seat belt condition data and to wirelessly transmit the seat occupation status and the seat belt status, which comprises assessing whether the seat belts of occupied seats are fastened or not; and
a portable crew device (5), **characterized in that**
the portable crew device (5) being a pair of smart glasses and being configured to receive the seat occupation status and the seat belt status from the computer-based evaluation system (4) and to project visual cabin information representing the seat occupation status and the seat belt status on the portable crew device (5);
wherein the video surveillance system (1) is configured to capture and wirelessly transmit a current view of the passenger cabin (10), wherein the portable crew device (5) is configured to receive the current view and overlay and project it together with the visual cabin information;
wherein the computer-based evaluation system (4) is further configured to assess a passenger status within the passenger cabin (10) based on the captured live video feed, the passenger status including information on whether passengers are seated or standing, wherein the portable crew device (5) is further configured to project the corresponding passenger status on the portable crew device (5) as part of the visual cabin information.

6. Aircraft (100) according to claim 5, wherein the current view of the passenger cabin (10) is a static view being independent of a current viewing direction and a current position associated with the portable crew device (5).

7. Aircraft (100) according to claim 5, wherein the current view of the passenger cabin (10) is a dynamic view being adapted according to a current viewing direction associated with the portable crew device (5).

8. Aircraft (100) according to one of the claims 5 to 7, wherein the portable crew device (5) is configured to project the visual cabin information on the portable crew device (5) as augmented reality images.

## Patentansprüche

1. Verfahren (M) zur Überwachung einer Passagierkabine (10) eines Luftfahrzeugs (100), das Verfahren (M) umfassend:
∘ Erfassen (M1) eines Live-Videofeeds der Passagierkabine (10) mit einem Videoüberwachungssystem (1);
∘ Erfassen (M2) von Anschnallzustandsdaten von Passagiersitzen (2) innerhalb der Passagierkabine (10) mit einem Anschnallsensorsystem (3);
∘ Beurteilen (M3) eines aktuellen Sitzbelegungsstatus der Passagiersitze (2) basierend auf dem erfassten Live-Videofeed und eines aktuellen Anschnallstatus der Passagiersitze (2) basierend auf den erfassten Anschnallzustandsdaten mit einem computerbasierten Auswertesystem (4), was das Beurteilen umfasst, ob die Sicherheitsgurte von belegten Sitzen geschlossen sind oder nicht;
∘ drahtloses Übertragen (M4) des Sitzbelegungsstatus und des Anschnallstatus an ein tragbares Besatzungsgerät (5), wobei das tragbare Besatzungsgerät (5) eine Datenbrille ist; und
∘ Projizieren (M5) von visuellen Kabineninformationen, die den Sitzbelegungsstatus und den Anschnallstatus repräsentieren, auf das tragbare Besatzungsgerät (5);
∘ wobei eine aktuelle Ansicht der Passagierkabine (10) mit dem Videoüberwachungssystem (1) erfasst, drahtlos an das tragbare Besatzungsgerät (5) übertragen und dort überlagert und zusammen mit den visuellen Kabineninformationen projiziert wird;
∘ wobei das computerbasierte Auswertesystem (4) einen Passagierstatus innerhalb der Passagierkabine (10) basierend auf dem erfassten Live-Videofeed beurteilt, wobei der Passagierstatus Informationen darüber enthält, ob Passagiere sitzen oder stehen, wobei ein entsprechender Passagierstatus auf das tragbare Besatzungsgerät (5) als Teil der visuellen Kabineninformationen projiziert wird.

2. Verfahren (M) nach Anspruch 1, wobei die aktuelle Ansicht der Passagierkabine (10) eine statische Ansicht ist, die unabhängig von einer aktuellen Blickrichtung und einer aktuellen Position ist, die dem tragbaren Besatzungsgerät (5) zugeordnet sind.

3. Verfahren (M) nach Anspruch 1, wobei die aktuelle Ansicht der Passagierkabine (10) eine dynamische Ansicht ist, die entsprechend einer aktuellen Blickrichtung angepasst wird, die dem tragbaren Besatzungsgerät (5) zugeordnet ist.

4. Verfahren (M) nach einem der Ansprüche 1 bis 3, wobei die visuellen Kabineninformationen als Augmented-Reality-Bilder auf das tragbare Besatzungsgerät (5) projiziert werden.

5. Luftfahrzeug (100) mit einer Passagierkabine (10), die eine Vielzahl von Passagiersitzen (2) und ein Kabinenüberwachungssystem (6) umfasst, das Kabinenüberwachungssystem (6) umfassend:
∘ ein Videoüberwachungssystem (1), das dafür konfiguriert ist, einen Live-Videofeed der Passagierkabine (10) zu erfassen;
∘ ein Anschnallsensorsystem (3), das dafür konfiguriert ist, Anschnallzustandsdaten von Passagiersitzen (2) innerhalb der Passagierkabine (10) zu erfassen;
∘ ein computerbasiertes Auswertesystem (4), das dafür konfiguriert ist, einen aktuellen Sitzbelegungsstatus der Passagiersitze (2) basierend auf dem erfassten Live-Videofeed und einen aktuellen Anschnallstatus der Passagiersitze (2) basierend auf den erfassten Anschnallzustandsdaten zu beurteilen und den Sitzbelegungsstatus und den Anschnallstatus drahtlos zu übertragen, was das Beurteilen umfasst, ob die Sicherheitsgurte von belegten Sitzen geschlossen sind oder nicht; und **gekennzeichnet durch**
∘ ein tragbares Besatzungsgerät (5), wobei das tragbare Besatzungsgerät (5) eine Datenbrille ist und dafür konfiguriert ist, den Sitzbelegungsstatus und den Anschnallstatus von dem computerbasierten Auswertesystem (4) zu empfangen und visuelle Kabineninformationen, die den Sitzbelegungsstatus und den Anschnallstatus repräsentieren, auf das tragbare Besatzungsgerät (5) zu projizieren;
∘ wobei das Videoüberwachungssystem (1) dafür konfiguriert ist, eine aktuelle Ansicht der Passagierkabine (10) zu erfassen und drahtlos zu übertragen, wobei das tragbare Besatzungsgerät (5) dafür konfiguriert ist, die aktuelle Ansicht zu empfangen und sie zusammen mit den visuellen Kabineninformationen zu überlagern und zu projizieren;
∘ wobei das computerbasierte Auswertesystem (4) ferner dafür konfiguriert ist, einen Passagierstatus innerhalb der Passagierkabine (10) basierend auf dem erfassten Live-Videofeed zu beurteilen, wobei der Passagierstatus Informationen darüber enthält, ob Passagiere sitzen oder stehen, wobei das tragbare Besatzungsgerät (5) ferner dafür konfiguriert ist, einen entsprechenden Passagierstatus auf das tragbare Besatzungsgerät (5) als Teil der visuellen Kabineninformationen zu projizieren.

6. Luftfahrzeug (100) nach Anspruch 5, wobei die aktuelle Ansicht der Passagierkabine (10) eine statische Ansicht ist, die unabhängig von einer aktuellen Blickrichtung und einer aktuellen Position ist, die dem tragbaren Besatzungsgerät (5) zugeordnet sind.

7. Luftfahrzeug (100) nach Anspruch 5, wobei die aktuelle Ansicht der Passagierkabine (10) eine dynamische Ansicht ist, die entsprechend einer aktuellen Blickrichtung angepasst wird, die dem tragbaren Besatzungsgerät (5) zugeordnet ist.

8. Luftfahrzeug (100) nach einem der Ansprüche 5 bis 7, wobei das tragbare Besatzungsgerät (5) dafür konfiguriert ist, die visuellen Kabineninformationen als Augmented-Reality-Bilder auf das tragbare Besatzungsgerät (5) zu projizieren.

## Revendications

1. Procédé (M) de surveillance d'une cabine de passagers (10) d'un aéronef (100), le procédé (M) comprenant:
∘ la capture (M1) d'un flux vidéo en direct de la cabine de passagers (10) avec un système de vidéosurveillance (1);
∘ la collecte (M2) de données d'état de ceinture de sécurité de sièges passagers (2) à l'intérieur de la cabine de passagers (10) avec un système de capteurs de ceinture de sécurité (3);
∘ l'évaluation (M3), avec un système d'évaluation informatique (4), d'un état d'occupation de siège actuel des sièges passagers (2) sur la base du flux vidéo en direct capturé et d'un état de ceinture de sécurité actuel des sièges passagers (2) sur la base des données d'état de ceinture de sécurité collectées, qui comprend l'évaluation visant à déterminer si les ceintures de sécurité de sièges occupés sont attachées ou non;
∘ la transmission sans fil (M4) de l'état d'occupation de siège et de l'état de ceinture de sécurité à un dispositif d'équipage portable (5), le dispositif d'équipage portable (5) étant une paire de lunettes intelligentes; et
∘ la projection (M5) d'informations visuelles de cabine représentant l'état d'occupation de siège et l'état de ceinture de sécurité sur le dispositif d'équipage portable (5);
∘ dans lequel une vue actuelle de la cabine de passagers (10) est capturée avec le système de vidéosurveillance (1), transmise sans fil au dispositif d'équipage portable (5) et y est superposée et projetée ensemble avec les informations visuelles de cabine;
∘ dans lequel le système d'évaluation informatique (4) évalue un état de passager à l'intérieur de la cabine de passagers (10) sur la base du flux vidéo en direct capturé, l'état de passager comprenant des informations indiquant si des passagers sont assis ou debout, dans lequel un état de passager correspondant est projeté sur le dispositif d'équipage portable (5) en tant que partie des informations visuelles de cabine.

2. Procédé (M) selon la revendication 1, dans lequel la vue actuelle de la cabine de passagers (10) est une vue statique indépendante d'une direction de visée actuelle et d'une position actuelle associées au dispositif d'équipage portable (5).

3. Procédé (M) selon la revendication 1, dans lequel la vue actuelle de la cabine de passagers (10) est une vue dynamique adaptée selon une direction de visée actuelle associée au dispositif d'équipage portable (5).

4. Procédé (M) selon l'une des revendications 1 à 3, dans lequel les informations visuelles de cabine sont projetées sur le dispositif d'équipage portable (5) sous forme d'images de réalité augmentée.

5. Aéronef (100) ayant une cabine de passagers (10) comprenant une pluralité de sièges passagers (2) et un système de surveillance de cabine (6), le système de surveillance de cabine (6) comprenant:
∘ un système de vidéosurveillance (1) configuré pour capturer un flux vidéo en direct de la cabine de passagers (10);
∘ un système de capteurs de ceinture de sécurité (3) configuré pour collecter des données d'état de ceinture de sécurité de sièges passagers (2) à l'intérieur de la cabine de passagers (10);
∘ un système d'évaluation informatique (4) configuré pour évaluer un état d'occupation de siège actuel des sièges passagers (2) sur la base du flux vidéo en direct capturé et un état de ceinture de sécurité actuel des sièges passagers (2) sur la base des données d'état de ceinture de sécurité collectées, et pour transmettre sans fil l'état d'occupation de siège et l'état de ceinture de sécurité, ce qui comprend l'évaluation visant à déterminer si les ceintures de sécurité de sièges occupés sont attachées ou non; et **caractérisé par**
∘ un dispositif d'équipage portable (5), le dispositif d'équipage portable (5) étant une paire de lunettes intelligentes et étant configuré pour recevoir l'état d'occupation de siège et l'état de ceinture de sécurité depuis le système d'évaluation informatique (4) et pour projeter des informations visuelles de cabine représentant l'état d'occupation de siège et l'état de ceinture de sécurité sur le dispositif d'équipage portable (5);
∘ dans lequel le système de vidéosurveillance (1) est configuré pour capturer et transmettre sans fil une vue actuelle de la cabine de passagers (10), dans lequel le dispositif d'équipage portable (5) est configuré pour recevoir la vue actuelle et la superposer et la projeter ensemble avec les informations visuelles de cabine;
∘ dans lequel le système d'évaluation informatique (4) est en outre configuré pour évaluer un état de passager à l'intérieur de la cabine de passagers (10) sur la base du flux vidéo en direct capturé, l'état de passager comprenant des informations indiquant si des passagers sont assis ou debout, dans lequel le dispositif d'équipage portable (5) est en outre configuré pour projeter un état de passager correspondant sur le dispositif d'équipage portable (5) en tant que partie des informations visuelles de cabine.

6. Aéronef (100) selon la revendication 5, dans lequel la vue actuelle de la cabine de passagers (10) est une vue statique indépendante d'une direction de visée actuelle et d'une position actuelle associées au dispositif d'équipage portable (5).

7. Aéronef (100) selon la revendication 5, dans lequel la vue actuelle de la cabine de passagers (10) est une vue dynamique adaptée selon une direction de visée actuelle associée au dispositif d'équipage portable (5).

8. Aéronef (100) selon l'une des revendications 5 à 7, dans lequel le dispositif d'équipage portable (5) est configuré pour projeter les informations visuelles de cabine sur le dispositif d'équipage portable (5) sous forme d'images de réalité augmentée.
